# FASCICULE DE BREVET EUROPEEN

(11) **EP 3 301 355 B1**
(45) Date de publication et mention de la délivrance du brevet: **10.01.2024**
(21) Numéro de dépôt: 17190860.1
(22) Date de dépôt: 13.09.2017
(51) Int. Cl.: F21V 5/00

(54) **PROCÉDÉ D' OBTENTION D'UN ENSEMBLE DE DIFFUSION DE LUMIÈRE, NOTAMMENT POUR VÉHICULE AUTOMOBILE**
HERSTELLUNGSVERFAHREN EINER LICHTDIFFUSIONSEINHEIT, INSBESONDERE FÜR KRAFTFAHRZEUG
METHOD FOR OBTAINING A LIGHT DIFFUSION ASSEMBLY, IN PARTICULAR FOR A MOTOR VEHICLE

(30) Priorité: 28.09.2016 FR 1659224
(43) Date de publication de la demande: 04.04.2018
(73) Titulaire: Valeo Vision, 93012 Bobigny Cedex (FR)
(72) Inventeur: ZHU, Lingxuan, 93012 BOBIGNY Cedex (FR)
(74) Mandataire: Valeo Visibility

(56) Documents cités:
- EP-A1- 2 179 833
- FR-A1- 2 172 127
- FR-A1- 2 301 357
- FR-A1- 2 853 952
- US-A- 5 721 039
- US-A1- 2013 100 690

## Description

L'invention se rapporte au domaine des ensembles de diffusion de lumière, notamment pour véhicule automobile.

Dans le domaine automobile, et notamment dans les dispositifs d'éclairage et/ou signalisation, il est fréquent d'employer des structures pourvues de propriétés diffusantes et agencées sur le trajet optique de la lumière émise par une source d'émission lumineuse.

Ceci permet notamment d'améliorer l'homogénéité du rendu lumineux obtenu, ce qui est particulièrement intéressant lorsque la source d'émission lumineuse comprend une pluralité d'éléments photoémissifs à caractère ponctuel tels que des diodes électroluminescentes.

L'emploi de structures diffusives n'est toutefois pas dénué d'inconvénients. En effet, ces structures sont souvent munies de microstructures arrangées sur une face transparente qu'elles comportent et formant un écran de diffusion.

Or, ces microstructures sont particulièrement fragiles, ce qui rend délicat leur manipulation. Cette fragilité tend notamment à être particulièrement marquée pour des microstructures réalisées par injection, dans la mesure où elles sont alors généralement réalisées à partir d'un matériau thermoplastique plus fragile que les matériaux durcissables pouvant être utilisés dans des procédés d'obtention ne reposant par sur de l'injection.

Le document EP 2 179 833 A1 décrit un procédé de réalisation en deux étapes dans lequel un écran opaque est déposé dans un moule avant l'injection d'un matériau transparent.

L'invention s'inscrit dans ce contexte et vise notamment à obtenir un ensemble de diffusion de lumière de ce type qui diminue les risques de dégradation des microstructures diffusives, en particulier celles obtenues par injection.

A cet effet, l'invention concerne un procédé d'obtention d'un ensemble de diffusion de lumière notamment pour véhicule automobile, l'ensemble de diffusion de lumière comprenant une pièce comportant une première et une deuxième portions, le procédé comprenant :
- former par bi-injection la première portion de l'ensemble de diffusion de lumière, la première portion formant écran de diffusion transparent et présentant des microstructures obtenues par injection et configurées pour diffuser la lumière passant par ladite première portion, et
- former par bi-injection la deuxième portion, la deuxième portion étant dépourvue de microstructures obtenues par injection et configurées pour diffuser la lumière, la deuxième portion comprenant une région externe s'étendant sur au moins une partie du pourtour de la première portion, la région externe s'étendant au-delà d'une partie périphérique de la première portion et à l'écart de la première portion, les première et deuxième portions étant formées au contact l'une de l'autre et étant solidaires l'une de l'autre.

Selon un aspect de l'invention, les microstructures de la première portion sont agencées sur la première portion au sein d'une région de diffusion, la deuxième portion présentant une région interne agencée en regard d'une partie périphérique de ladite région de diffusion sur au moins une partie du pourtour de ladite région de diffusion.

Selon un aspect de l'invention la deuxième portion est opaque.

Selon un aspect de l'invention la deuxième portion est transparente.

Selon un aspect de l'invention, les première et deuxième portions sont réalisées à partir de matériaux différents.

Selon un aspect de l'invention, les première et deuxième portions sont réalisées à partir d'un même matériau.

Selon un aspect de l'invention, les microstructures sont agencées sur la première portion au niveau d'une première face de la première portion et la première portion est au contact de la deuxième portion au niveau d'une deuxième face de la première portion opposée à ladite première face.

Selon un aspect de l'invention, la deuxième portion comporte des moyens de fixation adaptés pour la fixation de l'ensemble de diffusion de lumière à une structure de réception.

Selon un aspect de l'invention, le procédé comprend en outre la préhension de l'ensemble de diffusion de lumière, ladite préhension étant réalisée au seul moyen de la manipulation de l'ensemble de diffusion de lumière via la deuxième portion.

Selon un aspect de l'invention, les première et deuxième portions sont venues de matière entre elles.

La présente divulgation décrit en outre un ensemble de diffusion de lumière, notamment pour véhicule automobile, l'ensemble de diffusion de lumière comprenant une pièce comportant:
- une première portion formant écran de diffusion transparent et présentant des microstructures obtenues par injection et configurées pour diffuser la lumière passant par ladite première portion,
- une deuxième portion, la deuxième portion étant dépourvue de microstructures obtenues par injection et configurées pour diffuser la lumière, la deuxième portion comprenant une région externe s'étendant sur au moins une partie du pourtour de la première portion, la région externe s'étendant au-delà d'une partie périphérique de la première portion et à l'écart de la première portion,
les première et deuxième portions étant au contact l'une de l'autre et étant solidaires l'une de l'autre. Selon un aspect de l'invention, les microstructures de la première portion sont agencées sur la première portion au sein d'une région de diffusion, la deuxième portion présentant une région interne agencée en regard d'une partie périphérique de ladite région de diffusion sur au moins une partie du pourtour de ladite région de diffusion.

Selon un aspect de l'invention, les première et deuxième portions sont réalisées à partir de matériaux différents.

Selon un aspect de l'invention, la deuxième portion est opaque.

L'invention concerne en outre un dispositif d'émission lumineuse de véhicule automobile selon la revendication 11.

Selon un aspect de l'invention, le dispositif d'émission lumineuse est un dispositif d'éclairage et/ou de signalisation pour véhicule automobile.

L'invention sera mieux comprise à la lecture de la description détaillée va suivre, donnée uniquement à titre d'exemple et faite en référence aux Figures annexées, sur lesquelles :
- La Figure 1 est une illustration schématique d'un dispositif d'émission lumineuse selon l'invention ;
- La Figure 2 est une illustration d'une vue de face d'un ensemble de diffusion selon l'invention ;
- La Figure 3 est une illustration d'une section transverse de l'ensemble de diffusion de la Figure 2 ; et
- La Figure 4 est une illustration schématique d'un procédé d'obtention selon l'invention.

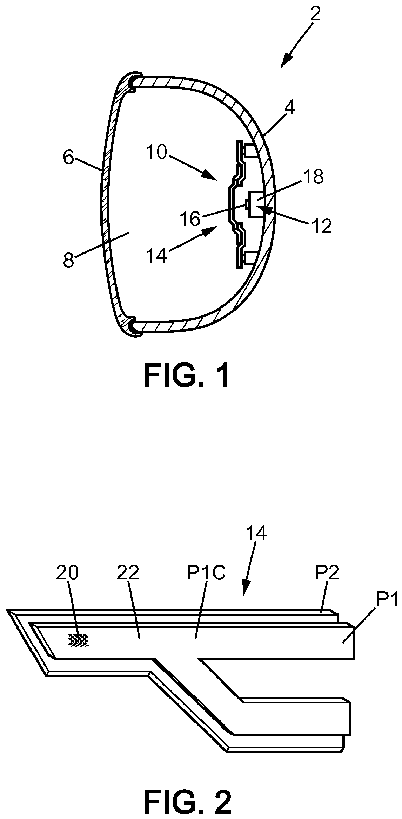

La **Figure 1** illustre un dispositif d'émission lumineuse 2 selon l'invention, ci-après dispositif 2, configuré pour émettre de la lumière.

Le dispositif 2 est avantageusement un dispositif destiné à être intégré à un véhicule automobile. Autrement dit, il s'agit d'un dispositif d'émission lumineuse de véhicule automobile.

Avantageusement, le dispositif 2 est un dispositif d'éclairage et/ou de signalisation de véhicule automobile.

Il est par exemple configuré pour mettre en oeuvre une ou plusieurs fonctions photométriques.

Une fonction photométrique est par exemple une fonction d'éclairage et/ou signalisation visible pour un oeil humain. On remarque que ces fonctions photométriques peuvent faire l'objet d'une ou plusieurs réglementations établissant des exigences de colorimétrie, d'intensité, de répartition spatiale selon une grille dite photométrique, ou encore de plages de visibilité de la lumière émise.

Le dispositif 2 est par exemple un dispositif d'éclairage et constitue alors un projecteur - ou phare - de véhicule. Il est alors configuré pour mettre en oeuvre une ou plusieurs fonctions photométriques par exemple choisie(s) parmi une fonction de feux de croisement dite « fonction code, une fonction de feux de route dite « fonction route », une fonction antibrouillard.

Alternativement ou parallèlement, le dispositif est un dispositif de signalisation destiné à être agencé à l'avant ou à l'arrière du véhicule.

Lorsqu'il est destiné à être agencé à l'avant, les fonctions photométriques qu'il est configuré pour mettre en oeuvre (éventuellement en sus de celles qu'il met en oeuvre en sa qualité de dispositif d'éclairage) incluent une fonction d'indication de changement de direction, une fonction d'éclairage diurne connue sous l'acronyme anglophone DRL, pour « Daytime Running Light », une fonction de signature lumineuse avant, une fonction de feux de position, une fonction dite « Side-marker », qui vient de l'anglais et peut être traduit par signalisation latérale.

Lorsqu'il est destiné à être agencé à l'arrière, ces fonctions photométriques incluent une fonction d'indication de recul, une fonction stop, une fonction antibrouillard, une fonction d'indication de changement de direction, une fonction de signature lumineuse arrière, une fonction lanterne, une fonction «Side-marker ».

Alternativement, le dispositif 2 est prévu pour l'éclairage de l'habitacle d'un véhicule et est alors destiné à émettre de la lumière principalement dans l'habitacle du véhicule.

Dans ce qui suit, le dispositif 2 est décrit de manière non limitative dans une configuration dans laquelle il est destiné à émettre de la lumière à l'extérieur du véhicule et est un dispositif de signalisation arrière.

En référence à la **Figure 1****,** le dispositif 2 comprend une enveloppe 4 et une glace de fermeture 6 coopérant l'une avec l'autre pour délimiter intérieurement une cavité 8.

Le dispositif 2 comprend en outre un module d'émission lumineuse 10 selon l'invention, ci-après module 10, agencé en tout ou partie dans la cavité 8.

Le module 10 forme le coeur d'émission de lumière du dispositif 2.

Il comprend une source d'émission lumineuse 12 et un ensemble de diffusion de lumière 14 selon l'invention, ci-après ensemble 14.

La source d'émission lumineuse 12, ci-après source 12, est configurée pour émettre de la lumière lors du fonctionnement du dispositif 2.

La source 12 comprend par exemple une pluralité d'éléments photoémissifs à semi-conducteurs 16 configurés pour émettre de la lumière lorsqu'alimentés en énergie électrique.

Ces éléments 16 se présentent par exemple sous la forme de diodes électroluminescentes.

Ils sont agencés sur un substrat 18 de la source 12 et sont par exemple distribués sur le substrat le long d'au moins une direction longitudinale du substrat. Ils sont par exemple configurés pour émettre de la lumière selon une direction privilégiée normale au substrat (au moins localement). Toutefois, alternativement, au moins une partie des diodes est configurée pour émettre dans une direction autre que cette normale, par exemple une direction comprise angulairement entre une direction tangente à la portion correspondante du substrat et cette normale (telle que par exemple une direction parallèle à cette direction tangente).

De façon générale, la lumière générée par la source 12 est émise en direction de la glace de fermeture (optionnellement via un dispositif de déviation optique prévu pour dévier la lumière émise par les éléments 16).

L'ensemble 14 est configuré pour interagir avec au moins une partie de la lumière générée par la source 12. Dans le cadre de l'invention,, il est avantageusement configuré pour diffuser au moins une partie de cette lumière.

L'ensemble 14 est agencé en regard de la source 12. Il est interposé sur le trajet optique de la lumière émise par la source 12. Plus spécifiquement, il est interposé entre la source 12 et la glace 6.

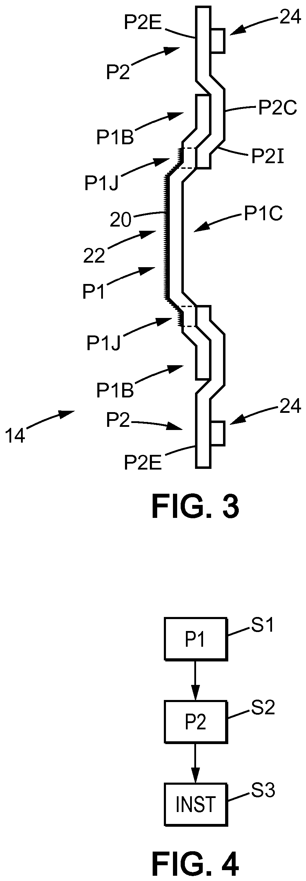

En référence aux **Figures 2** **et** **3****,** l'ensemble 14 comprend une première portion P1 et une deuxième portion P2.

Les deux portions P1, P2 définissent conjointement une pièce de l'ensemble de diffusion. Avantageusement, cette pièce constitue l'ensemble 14.

Les deux portions P1, P2 sont solidaires l'une de l'autre.

Avantageusement, elles sont venues de matière entre elles. Ici, on entend par « venues de matière » que les portions forment une pièce d'un seul bloc, par opposition à une configuration à deux pièces rapportées l'une à l'autre *a posteriori.* Comme décrit plus en détail ci-après, elles sont formées au contact l'une de l'autre et de sorte à être solidaires l'une de l'autre. Ici, par « formées au contact l'une de l'autre », on entend qu'au moins le matériau à partir duquel l'une d'elles est obtenue (par exemple après durcissement) est mis au contact de l'autre portion si celle-ci est déjà formée ou bien est mis au contact du matériau à partir duquel l'autre portion est obtenue (par exemple après durcissement).

Elles présentent des épaisseurs présentant par exemple le même ordre de grandeur.

La première portion P1 forme une portion centrale de l'ensemble 14. La deuxième portion P2 définit une bordure externe de l'ensemble sur au moins une partie du pourtour de l'ensemble 14.

La première portion P1 présente une forme quelconque. Par exemple, en vue de face, elle présente une forme générale polygonale telle rectangulaire. Optionnellement, comme illustré en Figure 2, elle présente en outre un bras s'étendant à partir d'une portion centrale rectangulaire en forme de bande qu'elle comprend, le bras étant par exemple coudé.

On remarque que la portion P1 est optionnellement courbée. Plus spécifiquement, dans la configuration correspondante, telle que vue de dessus au sens de l'orientation de la Figure 2, la première portion P1 est courbée.

Comme illustré en Figure 3 qui présente une coupe transversale de l'ensemble, la première portion P1 présente par exemple une partie centrale P1C, ainsi qu'une partie périphérique P1B **(****Figure 3****).**

La partie centrale présente une forme quelconque, par exemple une forme générale polygonale, telle que rectangulaire. Elle est par exemple surélevée par rapport à la partie périphérique.

La partie centrale P1C et la partie périphérique PIB sont par exemple jointes l'un à l'autre par une partie de jonction P1J. Cette jonction présente par exemple une configuration générale en forme de marche.

La partie périphérique P1B forme une région d'appui de la première portion P1 sur la deuxième portion P2. Elle se présente par exemple sous la forme d'une collerette, ou bande de matière, s'étendant à l'écart de la partie centrale P1C. Elle s'étend par exemple sensiblement parallèlement à la partie centrale P1C.

La partie périphérique P1B s'étend sur au moins une partie du pourtour de la partie centrale P1C. Dans l'exemple des Figures 2 et 3, elle s'étend sur une partie seulement de ce pourtour, la partie de l'ensemble située la plus à droite sur la Figure 2 et formant une extrémité latérale de l'ensemble ne présentant pas de partie périphérique. On remarque que cette partie située à droite est par exemple orientée vers l'intérieur du véhicule.

La première portion P1, et en particulier au moins la partie centrale, est configurée pour diffuser la lumière passant par elle. Autrement dit, elle forme un écran de diffusion de lumière.

A cet effet, elle comprend des microstructures 20 (dont seules quelques microstructures sont illustrées en Figure 2). Comme décrit ci-après, ces microstructures 20 sont obtenues par injection. Ces microstructures sont fragiles, et tendent notamment à se dégrader lorsqu'elles sont touchées, par exemple par une main ou par un objet de préhension.

Ces microstructures 20 sont avantageusement configurées pour diffuser la lumière leur parvenant par diffraction, ici par diffraction en transmission. A cet effet, elles présentent des dimensions caractéristiques d'un ordre de grandeur compris entre l'ordre de grandeur de la longueur d'onde de la lumière émise par la source 12 et cent fois cet ordre de grandeur..

Ces microstructures se présentent par exemple sous la forme de dépressions et/ou de saillies ménagées dans une surface de la première portion P1.

Les microstructures sont par exemple formées selon un agencement régulier, tel qu'un agencement en lignes et/ou en colonnes (tel que par exemple un agencement matriciel). Alternativement, elles sont formées selon un agencement irrégulier.

Les microstructures sont formées au sein d'une région 22 de la première portion. Par exemple, cette région est sensiblement intégralement couverte par les microstructures.

Cette région 22 est avantageusement portée par une face externe de la première portion P1. Ici, cette face externe est tournée vers la glace de fermeture 6 du dispositif.

Cette région 22 couvre par exemple sensiblement l'intégralité de la partie centrale P1C de la première portion. En outre, par exemple, elle s'étend sur une partie de la partie de jonction P1J.

La deuxième portion P2 est configurée pour faciliter la préhension et l'installation de la première portion P1 en permettant de prévenir sa dégradation, et en particulier celle des microstructures 20.

La deuxième portion P2 s'étend au contact de la première portion P1. Elles sont au contact l'une de l'autre au niveau de la surface de la première portion P1 opposée à celle portant les microstructures, c'est-à-dire ici la face interne de la première portion P1 tournée vers la source 12.

La deuxième portion P2 présente par exemple une configuration générale de cadre courant le long d'au moins une partie du pourtour de la première portion P1. Dans l'exemple des Figures 2 et 3, la deuxième portion court le long de la même portion du pourtour de la première portion que la partie périphérique P1B de la première portion.

Toujours en référence à la Figure 3, la deuxième portion P2 comprend une région externe P2E, une région centrale P2C, et une région interne P2I. La région externe et la région centrale sont venues de matière entre elles. En outre, la région centrale et la région interne sont venues de matière entre elles.

La région externe P2E s'étend au-delà de la première portion P1 à l'écart de celle-ci sur au moins une partie du pourtour de la première portion P1.

Autrement dit, comme illustré en Figure 3, la région externe P2E déborde la partie périphérique P1B de la première portion P1, et s'étend au-delà à l'écart de la partie centrale P1C sur la partie correspondante du pourtour de la première portion P1.

Cette région externe P2E forme une partie pour la préhension et la manipulation de l'ensemble 14 sans que la première portion n'ait besoin d'être directement manipulée.

La région externe P2E se présente par exemple sous la forme d'une collerette. Autrement dit, elle se présente sous la forme d'une bande de matière bordant le reste de l'ensemble 14 sur au moins une partir du pourtour de celui-ci. Elle s'étend par exemple sensiblement parallèlement à la partie centrale P1C de la première portion.

On remarque que la région externe P2E s'étend sur l'intégralité du parcours couvert par la partie périphérique P1B de la première portion P1, ou bien seulement sur une partie de celui-ci. Par exemple, dans une réalisation spécifique, la région externe comprend ou se présente sous la forme de languettes saillant à l'écart de la partie périphérique et distantes les uns des autres, et présente ainsi une configuration en créneaux s'étendant à partir de la région centrale P2C. Autrement, sa configuration de bande est discontinue le long de son parcours.

La région centrale P2C forme une région d'appui pour la partie périphérique P1B de la première portion, au contact de laquelle elle se trouve.

Conjointement aux régions interne et externe, elle se présente par exemple sous la forme d'une cuvette agencée entre ces dernières.

Elle est par exemple sensiblement parallèle à la partie centrale P1C de la première portion P1.

La région interne P2I forme également une région d'appui pour la première portion P1. On remarque que cette configuration d'appui est optionnelle, la région interne n'étant alors pas nécessairement au contact de la face arrière de la première portion. Dans une telle configuration, elle s'étend vers la partie centrale P1C de la première portion, par exemple dans son prolongement (auquel cas la région centrale ne définit pas une cuvette) ou non.

Avantageusement, la région interne P2I est au moins en partie agencée en regard d'une portion périphérique de la région de diffusion 22 comportant les microstructures 20 et définissant la frontière de la région de diffusion. Avantageusement, ceci est le cas sur l'intégralité du parcours de la deuxième portion P2.

Autrement dit, comme illustré en Figure 3, au moins une partie de la région interne P2I forme un masque pour les bords de la région de diffusion 22 vis-à-vis de la source de lumière 12. Ce masque couvre une portion périphérique de la région de diffusion sur au moins une partie du pourtour de cette région de diffusion, et avantageusement sur l'intégralité du parcours défini le long de la première portion P1 par la deuxième portion P2.

Les zones de la région de diffusion ainsi masquées pour la lumière de la source 12 par la région interne P2I sont délimitées par des pointillés en Figure 3.

Avantageusement, la deuxième portion P2 comprend en outre des moyens de fixation 24 pour la fixation de l'ensemble 14 à une structure de réception. Cette structure de réception est par exemple l'enveloppe 4, ou encore un bâti fixe par rapport à cette enveloppe.

Les moyens de fixation 24 sont par exemple prévus pour la fixation de l'ensemble 14 par collage, vissage, clipsage et/ou bouterollage.

Les moyens de fixation 24 comprennent par exemple un orifice de réception d'une vis ou d'un rivet pour une fixation par vis, respectivement par bouterollage.

Alternativement ou parallèlement, ils comprennent une languette ou une zone de réception d'une languette pour une fixation par clipsage.

Alternativement ou parallèlement, ils comprennent une zone configurée pour adhérer par collage à la structure de réception.

Les moyens de fixation 24 sont par exemple portés par la région externe P2E. Alternativement, ils ont portés par la région centrale P2C ou la région interne P2I. On remarque que dans des configurations où les moyens 24 comprennent des éléments pour la fixation de l'ensemble 14 selon différents principes de fixation, les éléments correspondants peuvent être distribués entre les différentes régions de la deuxième portion P2.

Plusieurs modes de réalisation sont envisageables en ce qui concerne le ou les matériaux à partir desquels les deux portions P1, P2 sont réalisées.

De façon générale, la première portion P1 est au moins en partie transparente pour la lumière émise par la source 12. En particulier, la région de diffusion 22 est ainsi transparente.

Dans une première réalisation, la deuxième portion P2 est opaque pour la lumière émise par la source 12.

La deuxième portion P2 présente par exemple une couleur rouge ou noire.

Dans cette réalisation, la première portion P1 et la deuxième portion P2 sont réalisés à partir de matériaux différents.

La première portion P1 comprend par exemple du polyméthacrylate de méthyle (d'acronyme PMMA), ou encore du polycarbonate (d'acronyme PC).

La deuxième portion P2 comprend par exemple du polyméthacrylate de méthyle, du polycarbonate ou de l'acrylonitrile butadiène styrène (d'acronyme ABS).

Par exemple, la deuxième portion est réalisée en PMMA rouge ou noir opaque, tandis que la première portion est réalisée en PMMA incolore ou rouge transparent.

On remarque que l'opacité et la couleur des portions P1 et P2 sont maîtrisées via le contrôle de la nature et de la quantité d'additifs ajoutés aux autres éléments des portions, en particulier un polymère, à partir desquels la portion est réalisée.

Par exemple, la différence entre un PMMA rouge transparent et un PMMA incolore résulte de l'adjonction au méthacrylate de méthyle par suite polymérisé d'un colorant rouge pour l'obtention de PMMA rouge, et l'absence de colorant pour le PMMA incolore.

En outre, l'opacité résultante découle de la présence ou non d'additifs de contrôle d'opacité au sein de la portion considérée. Les additifs contrôlant l'opacité sont par exemple des additifs plastosolubles connus.

Dans le cadre de l'invention, les première et deuxième portions peuvent être vues comme formées à partir d'un matériau comprenant polymère et des additifs optionnels.

Avantageusement, on entend ainsi par exemple que les matériaux des portions P1 et P2 sont différents si le polymère et/ou les additifs qu'ils comprennent sont différents, et plus avantageusement qu'au moins un élément parmi les polymères, les couleurs et les opacités respectives des portions est différent d'une portion à l'autre. Ici, on entend que cette différence pour l'opacité et/ou la couleur est visible à l'oeil nu pour un observateur.

Par exemple encore, on entend à l'inverse que leurs matériaux respectifs sont identiques si le polymère et les additifs sont les mêmes, et plus avantageusement que les polymères, les couleurs et les opacités respectives des portions sont identiques. Ici, on entend que l'opacité et la couleur sont identiques à l'oeil nul pour un observateur.

On remarque que dans cette configuration où les deux portions sont réalisées à partir de matériaux différents, les deux portions sont venues de matière, et une interface entre les matériaux respectifs de ces deux pièces existe au sein de l'ensemble 14.

Dans une deuxième réalisation, la première portion P1 et la deuxième portion P2 sont réalisées à partir de matériaux identiques, c'est-à-dire à partir du même matériau, avantageusement comme défini ci-dessus.

Dans cette configuration, les deux portions sont transparentes, c'est-à-dire au moins en partie transparentes à la lumière émise par la source 12.

Elles sont par exemple réalisées en PC ou PMMA.

Par exemple, elles sont toutes deux réalisées en PMMA transparent rouge ou incolore.

On remarque que dans cette configuration, les portions P1, P2 sont venues de matière entre elles, et il n'y a avantageusement pas d'interface entre l'une et l'autre au sein de la matière de l'ensemble.

Le fonctionnement du dispositif 2 va maintenant être décrit en référence aux Figures.

Lors du fonctionnement du dispositif 2, la source 12 génère de la lumière. Au moins une partie de cette lumière est émise en direction de l'ensemble 14. Au moins une partie de cette lumière passe par la première portion P1 et est alors diffusée par les microstructures 20. La lumière diffusée se propage en direction de la glace 4.

Un procédé d'obtention d'un ensemble 14 selon l'invention va maintenant être décrit en référence aux Figures.

De façon générale, pour l'obtention de l'ensemble 14, on forme les deux portions par injection.

Plus spécifiquement, lors d'une étape S1, on forme la première portion afin d'y générer les microstructures 20 et ainsi définir l'écran de diffusion qu'elle présente, et, lors d'une étape S2, on forme la deuxième portion.

Les portions sont formées au contact l'une de l'autre et sont solidaires l'une de l'autre une fois formées.

On remarque que l'ordre de formation des deux portions est quelconque.

Dans une première réalisation illustrée en Figure 4, la deuxième portion est initialement formée, puis la première portion est formée à son contact.

Dans une deuxième réalisation, l'ordre est inverse. On forme la première portion d'abord, puis ensuite la deuxième portion au contact de la première.

Dans une troisième réalisation, elles sont formées simultanément, ou du moins au cours d'une même étape d'injection.

Le détail de la formation des portions dépend des matériaux choisis pour elles.

Dans une première approche dans le cadre de laquelle les matériaux des deux portions P1, P2 sont différents, les deux portions sont avantageusement formées par une opération de bi-injection des deux matériaux à partir desquels les portions sont formées.

Le principe d'une opération de bi-injection est connu en soi, et gravite autour de l'injection des deux matériaux dans un même moule. Ici, le moule comprend une surface prévue pour définir les microstructures 20, et présente ainsi une zone de configuration géométrique complémentaire à celle que la zone de diffusion 22 est destinée à présenter.

Dans cette approche, la bi-injection des deux matériaux est séquentielle.

Le matériau de la première des portions qui est formée est injecté sous forme liquide dans le moule de façon à occuper un volume correspondant à la forme définitive choisie pour la portion correspondante.

Ce matériau durcit au moins partiellement de façon à figer cette forme. Une fois ce matériau durci au moins partiellement, le matériau de la deuxième portion est injecté dans le moule sous forme liquide. Il vient alors au contact du premier matériau injecté tout en occupant le volume correspondant à la forme définitive choisie pour la portion correspondante.

En durcissant à son tour, il fige la forme de la portion correspondante et solidarise le matériau de sa portion à la première portion formée.

Dans une deuxième approche dans le cadre de laquelle les matériaux des deux portions P1, P2 sont identiques, les deux portions sont par exemple formées au cours d'une seule étape d'injection.

Dans le cadre de celle-ci, le matériau à partir duquel les deux portions sont formées est injecté dans le moule sous forme liquide, et emplit celui-ci de façon à présenter la configuration géométrique finale au sein de laquelle il définit à la fois les deux portions.

Le matériau durcit et fige la configuration géométrique de l'ensemble, et conserve alors celle-ci une fois ôté du moule.

Alternativement, les deux portions qui sont réalisées à partir du même matériau sont formées séquentiellement comme dans le cadre de la première approche, à ceci près que les matériaux successivement injectés sont identiques.

On remarque que pour l'éjection des portions P1, P2 du moule et leur manipulation ultérieure, l'ensemble 14 est manipulé par le seul intermédiaire de la deuxième portion P2, la première portion P1 et en particulier les microstructures 20 n'étant pas touchées.

A l'issue des étapes S1 et S2, l'ensemble 14 obtenu est agencé au sein du dispositif 2.

Par exemple, il est fixé à l'enveloppe 4 via les moyens de fixation 24. Par exemple, il y est fixé directement ou bien indirectement par l'intermédiaire d'un bâti ou de toute autre structure rapportée à l'enveloppe 4.

Au cours de cette étape, on réalise la préhension de l'ensemble 14 par l'intermédiaire d'une manipulation de la seule deuxième portion P2.

L'invention présente de nombreux avantages.

En effet, de par la présence de la deuxième portion au sein de l'ensemble et ce dès la fabrication de l'ensemble, les manipulations nécessaires de l'ensemble peuvent être réalisées de façon à limiter les risques d'une dégradation des microstructures obtenues par injection, qui sont particulièrement fragiles.

En outre, ceci est obtenu de manière simple et peu coûteuse, et ne requiert pas la mise à disposition d'un équipement spécifique dédié à la manipulation de l'ensemble et spécifiquement conçu pour éviter les dégradations des microstructures.

En outre, la présence de la deuxième portion, que l'on pourrait qualifier de portion « technique » par opposition à la première portion formant écran de diffusion, est obtenue dès la fabrication de l'ensemble, et ne résulte pas d'une opération de fixation à l'écran de diffusion d'une pièce spécifique obtenue par ailleurs, opération présentant elle-même des risques pour les microstructures et étant de nature à réduire la tenue mécanique de l'ensemble dans le temps.

## Revendications

1. Procédé d'obtention d'un ensemble de diffusion de lumière (14) notamment pour véhicule automobile, l'ensemble de diffusion de lumière comprenant une pièce comportant une première et une deuxième portions (P1, P2), le procédé comprenant :
- former par bi-injection la première portion (P1) de l'ensemble de diffusion de lumière, la première portion formant écran de diffusion transparent et présentant des microstructures (20) obtenues par injection et configurées pour diffuser la lumière passant par ladite première portion, et
- former par bi-injection la deuxième portion (P2), la deuxième portion étant dépourvue de microstructures obtenues par injection et configurées pour diffuser la lumière, la deuxième portion comprenant une région externe (P2E) s'étendant sur au moins une partie du pourtour de la première portion, la région externe s'étendant au-delà d'une partie périphérique (P1B) de la première portion (P1) et à l'écart de la première portion (P1),
les première et deuxième portions (P1, P2) étant formées au contact l'une de l'autre et étant solidaires l'une de l'autre.

2. Procédé selon la revendication 1, dans lequel les microstructures (20) de la première portion sont agencées sur la première portion au sein d'une région de diffusion (22), la deuxième portion présentant une région interne (P2I) agencée en regard d'une partie périphérique de ladite région de diffusion sur au moins une partie du pourtour de ladite région de diffusion.

3. Procédé selon la revendication 1 ou 2, dans lequel la deuxième portion (P2) est opaque.

4. Procédé selon la revendication 1 ou 2, dans lequel la deuxième portion (P2) est transparente.

5. Procédé selon l'une quelconque des revendications précédentes, dans lequel les première et deuxième portions (P1, P2) sont réalisées à partir de matériaux différents.

6. Procédé selon l'une quelconque des revendications 1 à 4, dans lequel les première et deuxième portions (P1, P2) sont réalisées à partir d'un même matériau.

7. Procédé selon l'une quelconque des revendications précédentes, dans lequel les microstructures (20) sont agencées sur la première portion au niveau d'une première face de la première portion (P1) et la première portion (P1) est au contact de la deuxième portion (P2) au niveau d'une deuxième face de la première portion (P1) opposée à ladite première face.

8. Procédé selon l'une quelconque des revendications précédentes, dans lequel la deuxième portion (P2) comporte des moyens de fixation (24) adaptés pour la fixation de l'ensemble de diffusion de lumière (14) à une structure de réception.

9. Procédé selon l'une quelconque des revendications précédentes, le procédé comprenant en outre la préhension de l'ensemble de diffusion de lumière (14), ladite préhension étant réalisée au seul moyen de la manipulation de l'ensemble de diffusion de lumière via la deuxième portion (P2).

10. Procédé selon l'une quelconque des revendications précédentes, dans lequel les première et deuxième portions (P1, P2) sont venues de matière entre elles.

11. Dispositif d'émission lumineuse de véhicule automobile, comprenant :
- une source d'émission lumineuse (12) adaptée pour émettre de la lumière, et
- un ensemble de diffusion de lumière (14) obtenu du procédé selon l'une quelconque des revendications 1 à 10 comportant :
- une première portion (P1) formant écran de diffusion transparent et présentant des microstructures (20) obtenues par injection et configurées pour diffuser la lumière passant par ladite première portion,
- une deuxième portion (P2), la deuxième portion étant dépourvue de microstructures obtenues par injection et configurées pour diffuser la lumière, la deuxième portion comprenant une région externe (P2E) s'étendant sur au moins une partie du pourtour de la première portion, la région externe s'étendant au-delà d'une partie périphérique (P1B) de la première portion (P1) et à l'écart de la première portion (P1), les première et deuxième portions (P1, P2) étant au contact l'une de l'autre et étant solidaires l'une de l' autre ;
**caractérisé en ce que** :
- la première portion (P1) dudit ensemble de diffusion de lumière étant interposée sur le trajet optique d'au moins une partie de la lumière émise par la source d'émission lumineuse ;
- la deuxième portion (P2) comprend en outre des moyens de fixation (24) pour la fixation de l'ensemble de diffusion de lumière (14) à une structure de réception du dispositif d'émission lumineuse.

12. Dispositif selon la revendication 11, le dispositif d'émission lumineuse (2) étant un dispositif d'éclairage et/ou de signalisation pour véhicule automobile.

13. Dispositif selon la revendication 11 ou la revendication 12, dans lequel les microstructures (20) de la première portion sont agencées sur la première portion au sein d'une région de diffusion (22), la deuxième portion présentant une région interne (P2I) agencée en regard d'une partie périphérique de ladite région (22) de diffusion sur au moins une partie du pourtour de ladite région de diffusion (22).

14. Dispositif selon l'une des revendications 11 à 13, dans lequel les première et deuxième portions sont réalisés à partir de matériaux différents.

15. Dispositif selon l'une des revendications 11 à 14, dans lequel la deuxième portion (P2) est opaque.

## Patentansprüche

1. Verfahren zur Herstellung einer Lichtstreuanordnung (14), insbesondere für ein Kraftfahrzeug, wobei die Lichtstreuanordnung ein Teil umfasst, das einen ersten und einen zweiten Abschnitt (P1, P2) beinhaltet, wobei das Verfahren umfasst:
- Bilden des ersten Abschnitts (P1) der Lichtstreuanordnung durch 2K-Spritzguss, wobei der erste Abschnitt einen transparenten Streuschirm bildet und Mikrostrukturen (20) aufweist, die durch Spritzguss erhalten werden und dazu ausgestaltet sind, das durch den ersten Abschnitt durchtretende Licht zu streuen, und
- Bilden des zweiten Abschnitts (P2) durch 2K-Spritzguss, wobei der zweite Abschnitt keine Mikrostrukturen aufweist, die durch Spritzguss erhalten werden und dazu ausgestaltet sind, das Licht zu streuen, wobei der zweite Abschnitt eine äußere Region (P2E) umfasst, die sich über mindestens einen Teil des Umfangs des ersten Abschnitts erstreckt, wobei sich die äußere Region jenseits eines peripherischen Teils (P1B) des ersten Abschnitts und beabstandet von dem ersten Abschnitt (P1) erstreckt,
wobei die ersten und zweiten Abschnitte (P1, P2) in Kontakt miteinander gebildet sind und fest miteinander verbunden sind.

2. Verfahren nach Anspruch 1, bei dem die Mikrostrukturen (20) des ersten Abschnitts auf dem ersten Abschnitt in einer Streuregion (22) angeordnet sind, wobei der zweite Abschnitt eine innere Region (P2I) aufweist, die gegenüber einem peripherischen Teil der Streuregion über mindestens einen Teil des Umfangs der Streuregion angeordnet ist.

3. Verfahren nach Anspruch 1 oder 2, bei dem der zweite Abschnitt (P2) lichtundurchlässig ist.

4. Verfahren nach Anspruch 1 oder 2, bei dem der zweite Abschnitt (P2) transparent ist.

5. Verfahren nach einem der vorhergehenden Ansprüche, bei dem die ersten und zweiten Abschnitte (P1, P2) aus unterschiedlichen Materialien ausgeführt sind.

6. Verfahren nach einem der Ansprüche 1 bis 4, bei dem die ersten und zweiten Abschnitte (P1, P2) aus einem selben Material ausgeführt sind.

7. Verfahren nach einem der vorhergehenden Ansprüche, bei dem die Mikrostrukturen (20) auf dem ersten Abschnitt an einer ersten Seite des ersten Abschnitts (P1) angeordnet sind und der erste Abschnitt (P1) mit dem zweiten Abschnitt (P2) an einer zweiten Seite des ersten Abschnitts (P1), die zu der ersten Seite entgegengesetzt ist, in Kontakt ist.

8. Verfahren nach einem der vorhergehenden Ansprüche, bei dem der zweite Abschnitt (P2) Befestigungsmittel (24) beinhaltet, die zur Befestigung der Lichtstreuanordnung (14) an einer Aufnahmestruktur geeignet sind.

9. Verfahren nach einem der vorhergehenden Ansprüche, wobei das Verfahren ferner das Ergreifen der Lichtstreuanordnung (14) umfasst, wobei das Ergreifen mittels der bloßen Handhabung der Lichtstreueinheit über den zweiten Abschnitt (P2) ausgeführt wird.

10. Verfahren nach einem der vorhergehenden Ansprüche, bei dem die ersten und zweiten Abschnitte (P1, P2) einstückig sind.

11. Lichtstreuanordnung für ein Kraftfahrzeug, umfassend:
- eine Lichtemissionsquelle (12), die geeignet ist, Licht zu emittieren, und
- eine Lichtstreuanordnung (14), die mit dem Verfahren nach einem der Ansprüche 1 bis 10 hergestellt wird, beinhaltend:
- einen ersten Abschnitt (P1), der einen transparenten Streuschirm bildet und Mikrostrukturen (20) aufweist, die durch Spritzguss hergestellt werden und dazu ausgestaltet sind, das durch den ersten Abschnitt durchtretende Licht zu streuen,
- einen zweiten Abschnitt (P2), wobei der zweite Abschnitt keine Mikrostrukturen aufweist, die durch Spritzguss erhalten werden und dazu ausgestaltet sind, das Licht zu streuen, wobei der zweite Abschnitt eine äußere Region (P2E) umfasst, die sich über mindestens einen Teil des Umfangs des ersten Abschnitts erstreckt, wobei sich die äußere Region jenseits eines peripherischen Teils (P1B) des ersten Abschnitts und beabstandet von dem ersten Abschnitt (P1) erstreckt, wobei die ersten und zweiten Abschnitte (P1, P2) in Kontakt miteinander sind und fest miteinander verbunden sind;
**dadurch gekennzeichnet, dass**:
- der erste Abschnitt (P1) der Lichtstreuanordnung auf dem optischen Pfad mindestens eines Teils des von der Lichtemissionsquelle emittierten Lichts zwischengesetzt ist;
- der zweite Abschnitt (P2) ferner Befestigungsmittel (24) zur Befestigung der Lichtstreuanordnung (14) an einer Aufnahmestruktur der Lichtemissionsvorrichtung umfasst.

12. Vorrichtung nach Anspruch 11, wobei die Lichtemissionsvorrichtung (2) eine Beleuchtungs- und/oder Signalisierungsvorrichtung für ein Kraftfahrzeug ist.

13. Vorrichtung nach Anspruch 11 oder Anspruch 12, bei der die Mikrostrukturen (20) des ersten Abschnitts auf dem ersten Abschnitt in einer Streuregion (22) angeordnet sind, wobei der zweite Abschnitt eine innere Region (P2I) aufweist, die gegenüber einem peripherischen Teil der Streuregion (22) über mindestens einen Teil des Umfangs der Streuregion (22) angeordnet ist.

14. Vorrichtung nach einem der Ansprüche 11 bis 13, bei der die ersten und zweiten Abschnitte aus unterschiedlichen Materialien ausgeführt sind.

15. Vorrichtung nach einem der Ansprüche 11 bis 14, bei welcher der zweite Abschnitt (P2) lichtundurchlässig ist.

## Claims

1. Process for obtaining a light-scattering assembly (14) in particular for a motor vehicle, the light-scattering assembly comprising a part including first and second sections (P1, P2), the process comprising:
- forming, by injection molding, the first section (P1) of the light-scattering assembly, the first section forming a transparent scattering screen having microstructures (20) obtained by injection molding and configured to scatter light passing through said first section; and
- forming, by injection molding, the second section (P2), the second section being devoid of microstructures obtained by injection molding and configured to scatter light, the second section comprising an external region (P2E) extending around at least some of the perimeter of the first section, the external region extending beyond a peripheral portion (P1B) of the first section (P1) and away from the first section (P1),
the first and second sections (P1, P2) being formed in contact with each other and being united with each other.

2. Process according to Claim 1, wherein the microstructures (20) of the first section are arranged in the first section within a scattering region (22), the second section having an internal region (P2I) that is arranged facing a peripheral portion of said scattering region around at least some of the perimeter of said scattering region.

3. Process according to Claim 1 or 2, wherein the second section (P2) is opaque.

4. Process according to Claim 1 or 2, wherein the second section (P2) is transparent.

5. Process according to any one of the preceding claims, wherein the first and second sections (P1, P2) are produced from different materials.

6. Process according to any one of Claims 1 to 4, wherein the first and second sections (P1, P2) are produced from the same material.

7. Process according to any one of the preceding claims, wherein the microstructures (20) are arranged in the first section on a first face of the first section (P1) and the first section (P1) makes contact with the second section (P2) via a second face of the first section (P1) opposite said first face.

8. Process according to any one of the preceding claims, wherein the second section (P2) includes fastening means (24) suitable for fastening the light-scattering assembly (14) to a receiving structure.

9. Process according to any one of the preceding claims, the process furthermore comprising gripping the light-scattering assembly (14), said grip being achieved solely by means for handling the light-scattering assembly via the second section (P2).

10. Process according to any one of the preceding claims, wherein the first and second sections (P1, P2) are integral with each other.

11. Light-emitting device of a motor vehicle, comprising:
- a light-emitting source (12) suitable for emitting light; and
- a light-scattering assembly (14) obtained from the process according to any one of Claims 1 to 10 comprising
- a first section (P1) forming a transparent diffusion screen and featuring microstructures (20) obtained by injection and configured to diffuse light passing through said first portion, a second section (P2), the second section being devoid of microstructures configured to diffuse light, the second portion comprising an outer region (P2E) extending over at least part of the periphery of the first section, the outer region extending beyond a peripheral part (P1B) of the first section (P1) and away from the first portion (P1), the first and second portions and second portions (P1, P2) being in contact with each other and being united with each other
Charaterized in that
- the first section (P1) of said light-scattering assembly being interposed on the optical path of at least some of the light emitted by the light-emitting source.
- the second section (P2) urther comprises fastening means (24) for fastening the light-scattering assembly (14) to a receiving structure of the light-emitting device light-emitting device.

12. Device according to Claim 11, the light-emitting device (2) being a lighting and/or signaling device for a motor vehicle.

13. Device according to claim 11 or claim 12, wherein the microstructures (20) of the first section are arranged in the first section within a scattering region (22), the second section having an internal region (P2I) that is arranged facing a peripheral portion of said scattering region (22) around at least some of the perimeter of said scattering region (22).

14. Device according to any one of claims 11 to 13 wherein the first and second sections are produced from different materials.

15. Device according to any one of claims 11 to 14, wherein the second section (P2) is opaque.
